# EUROPÄISCHE PATENTSCHRIFT

(11) **EP 0 836 887 B1**
(45) Veröffentlichungstag und Bekanntmachung des Hinweises auf die Patenterteilung: **15.11.2000**
(21) Anmeldenummer: 97116206.0
(22) Anmeldetag: 18.09.1997
(51) Int. Cl.: B02C 18/44, B02C 18/22

(54) **Verfahren zum Steuern der Einzugwalzen einer Schneidmühle zum Zerkleinern des Restgitters einer vorgeschalteten Thermoformaschine und Schneidmühle zur Durchführung des Verfahrens**
Method for controlling the feed rollers of a granulating mill for comminuting the scrap plastic film of a thermoforming machine and granulating mill for implementing such method
Procédé de régulation des rouleaux d'alimentation d'un broyeur granulateur pour la granulation de déchets de matière plastique sous forme de bandes sortant d'une machine de thermoformage et broyeur granulateur pour la mise en oeuvre du procédé

(30) Priorität: 15.10.1996 DE 19642459
(43) Veröffentlichungstag der Anmeldung: 22.04.1998
(73) Patentinhaber: Adolf Illig Maschinenbau GmbH & Co, D-74081 Heilbronn (DE)
(72) Erfinder: Wagner, Hans Dieter, 74626 Bretzfeld-Waldbach (DE)

(56) Entgegenhaltungen:
- EP-A- 0 344 698
- DE-A- 1 635 448
- DE-U- 8 806 926
- US-A- 4 406 251
- US-A- 4 534 253
- US-A- 4 651 658

## Beschreibung

Die Erfindung betrifft ein Verfahren zum Steuern der Einzugswalzen einer Schneidmühle zum Zerkleinern des Restgitters einer vorgeschalteten Thermoformmaschine nach der Gattung des Hauptanspruches sowie eine Vorrichtung zur Durchführung des Verfahrens.

Aus dem deutschen Gebrauchsmuster DE-U-88 06 926.5 ist eine Schneidmühle mit Einzugswalzen bekannt, wobei auf die Steuerung der Einzugswalzen nicht eingegangen ist. Bei den vom Anmelder vertriebenen Schneidmühlen werden diese Einzugswalzen in der Weise betrieben, daß das Restgitter über eine Schwinge geleitet wird, deren beide Endlagen über je einen Schalter abgefragt werden. Die vorgeschaltete Thermoformmaschine arbeitet intermittierend. Nach einem oder mehreren Transportschritten erreicht die Schwinge eine Endstellung und betätigt einen Schalter. Über diesen Schalter werden die Einzugswalzen der Schneidmühle gestartet und zwar so lange, bis die Schwinge ihre andere Endlage erreicht und einen Schalter betätigt hat. Über diesen Schalter werden die Einzugswalzen abgeschaltet. Die Einzugswalzen arbeiten also ebenfalls intermittierend, wobei die Schalthäufigkeit je nach Einstellung geringer oder gleich ist der Taktzahl der Thermoformmaschine. Der Rotor der Schneidmühle, der die Schneidmesser trägt, läuft konstant und schneidet vom Restgitter einen Streifen ab entsprechend des Vorschubes des Restgitters zwischen zwei Schneidvorgängen in der Größenordnung von 5 bis 10 mm. Die Drehzahlen des Rotors und der Einzugswalzen sind entsprechend aufeinander abgestimmt.

Bei Schneidmühlen dieser Bauart werden die abgeschnittenen Streifen des Restgitters so lange herumgewirbelt und dabei weiter zerkleinert, bis sie so klein sind, daß sie durch ein Sieb fallen und dann als Granulat abgesaugt und wieder eingeschmolzen werden können. Unerwünscht bei solchen Schneidmühlen sind Staub und sogenannte Spreißel, also schmale und lange Kunststoffteile, die in Längsrichtung durch das Sieb fallen können. Diese Spreißel können eine Brückenbildung des Granulats in den Absaugleitungen auslösen und damit die Leitungen verstopfen. Im Extruder gibt es ebenfalls Probleme bei den Dosiereinrichtungen mit dem Neugranulat. Störungen sind die Folge.

Untersuchungen haben gezeigt, worin die Ursachen dieser Spreißelbildung liegen. Bei jedem Start der Einzugswalzen wird deren Drehzahl von Null auf eine konstante vorgegebene Drehzahl gebracht. Dabei muß mit einem Schlupf des Restgitters gerechnet werden, da dessen Masse und die Masse der Schwinge von Null aus beschleunigt werden müssen. Beides führt dazu, daß während eines kurzen Zeitraumes der Vorschub zwischen zwei Schneidvorgängen zwischen Null und dem Maximum von ca. 5 - 10 mm liegt. Diese geringen Vorschübe produzieren Streifen im Millimeterbereich, was Staub und Spreißel zur Folge hat. Gleiche Auswirkungen hat das Abschalten der Einzugswalzen, weil dann die Schnittbreite vom Maximum gegen Null geht und dieselbe Problemzone durchläuft.

Der Erfindung liegt die Aufgabe zugrunde, das Verfahren zum Steuern der Einzugswalzen gemäß Anspruch 1 bei einer Schneidmühle gemäß Anspruch 11 so auszuführen, daß eine Staub- und Spreißelbildung weitgehend vermieden wird und die Störungsanfälligkeit der Schneidmühle damit gesenkt wird. Eine Schneidmühle zur Durchführung des Verfahrens nach Anspruch 1 wird im Anspruch 11 beschrieben.

Zur Lösung der Aufgabe werden die kennzeichnenden Merkmale des Hauptanspruches vorgeschlagen. Durch die kontinuierliche Arbeitsweise der Einzugswalzen entfallen die Beschleunigungs- und Abbremsphasen der Einzugswalzen und Staub und Spreißel entstehen in weit geringerem Maße. Ausgehend von dieser Erkenntnis bestand die Aufgabe der Erfindung des weiteren darin, die Ermittlung und Anpassung der Drehzahl der Einzugswalzen auf einfache Weise durchzuführen. Die Steuerung sollte die Drehzahl selbständig ermitteln aufgrund der Größe der Zwischenschlaufe, so daß auch Änderungen der Taktzahl der vorgeschalteten Thermoformmaschine automatisch erkannt und zu einer Anpassung der Drehzahl der Einzugswalzen herangezogen werden können.

Bevorzugte Ausführungsformen der Erfindung werden in den abhängigen Ansprüchen beschrieben.

Ein Ausführungsbeispiel des erfindungsgemäßen Verfahrens und Weiterbildungen sind anhand der schematischen Zeichnungen, die die Schneidmühle zur Durchführung des Verfahrens zeigen, näher beschrieben. Es zeigt:
- Figur 1 -: einen Querschnitt durch die Schneidmühle
- Figur 2 -: eine Darstellung der Schwinge, über die das Restgitter geleitet wird, in einer Draufsicht
- Figur 3 -: ein Blockschaltbild der Steuerung
- Figur 4 -: ein Diagramm Zeit/Winkellage der Schwinge

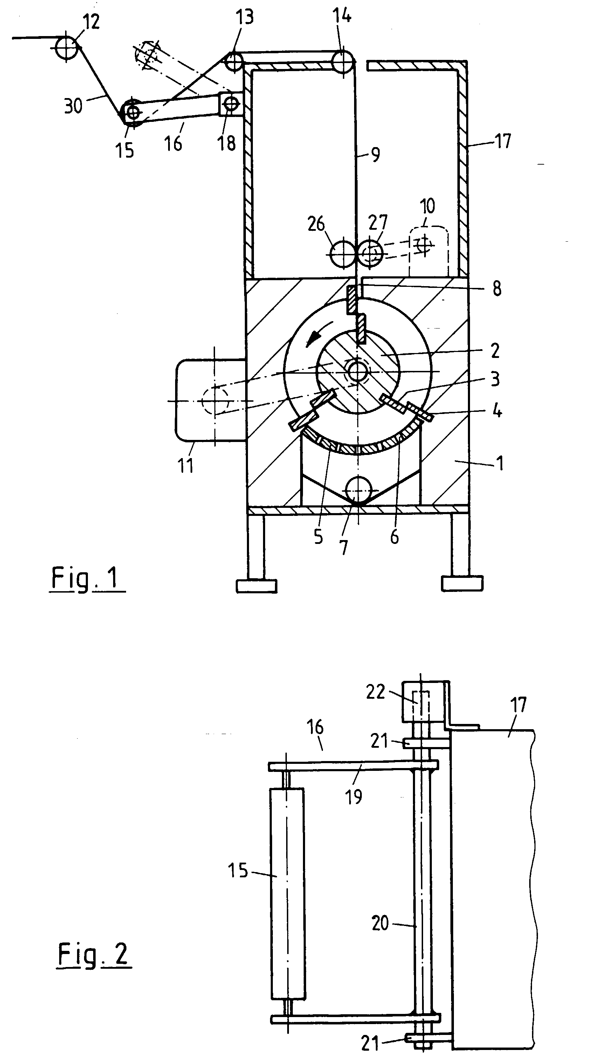

Die Schneidmühle besteht aus einem Stator 1 und einem darin angeordneten Rotor 2, wobei am Rotor 2 mehrere Messer 3 ringsum angeordnet sind, die mit festen Messern 4 am Stator 1 zusammenwirken. An der Unterseite weist der Stator 1 ein Sieb 5 mit Durchbrüchen 6 auf, deren Durchmesser der gewünschten Mahlgutgröße entspricht. Über einen seitlichen Rohranschluß 7 wird das Mahlgut, das durch das Sieb 5 gefallen ist, abgesaugt. Durch einen Schlitz 8 wird das von einer vorgeschalteten und nicht dargestellten Thermoformmaschine zugeführte Restgitter 9 von Einzugswalzen 26, 27 der Schneideeinrichtung zugeführt. Beide Einzugswalzen 26, 27 sind aneinandergepreßt und werden von einem Antrieb 10 in Drehung versetzt. Der Rotor 2 wird von einem Antrieb 11 angetrieben. Die Zuführung des Restgitters 9 erfolgt über Umlenkwalzen 12, 13, 14 sowie über eine Walze 15, die Teil einer Schwinge 16 ist. Diese Schwinge 16 ist am Gehäuse 17 drehbar im Drehpunkt 18 gelagert und führt dazu, daß das Restgitter 9 eine Schlaufe 30 bildet. Ihre genauere Ausbildung zeigt Figur 2.

Die Walze 15 sitzt drehbar in zwei Laschen 19, die mit einer Welle 20 verbunden sind. In Lagern 21 ist die Welle drehbar gelagert. Auf der Welle 20 sitzt das drehbare Teil eines Sensors 22, dessen starres Teil am Gehäuse 17 befestigt ist. Der Sensor 22 ist so ausgebildet, daß er die Winkellage der Schwinge 16 stufenlos, digital oder analog, erfassen und an eine Steuerung 23 melden kann. Diese Steuerung 23 steht mit dem Antriebsmotor 10 für die Einzugswalzen 26, 27 in der Weise in Verbindung, daß sich dessen Drehzahl stufenlos verändern läßt, in dem sie z. B. einen Frequenzumrichter 24 ansteuert, der den Antrieb 10 beeinflußt.

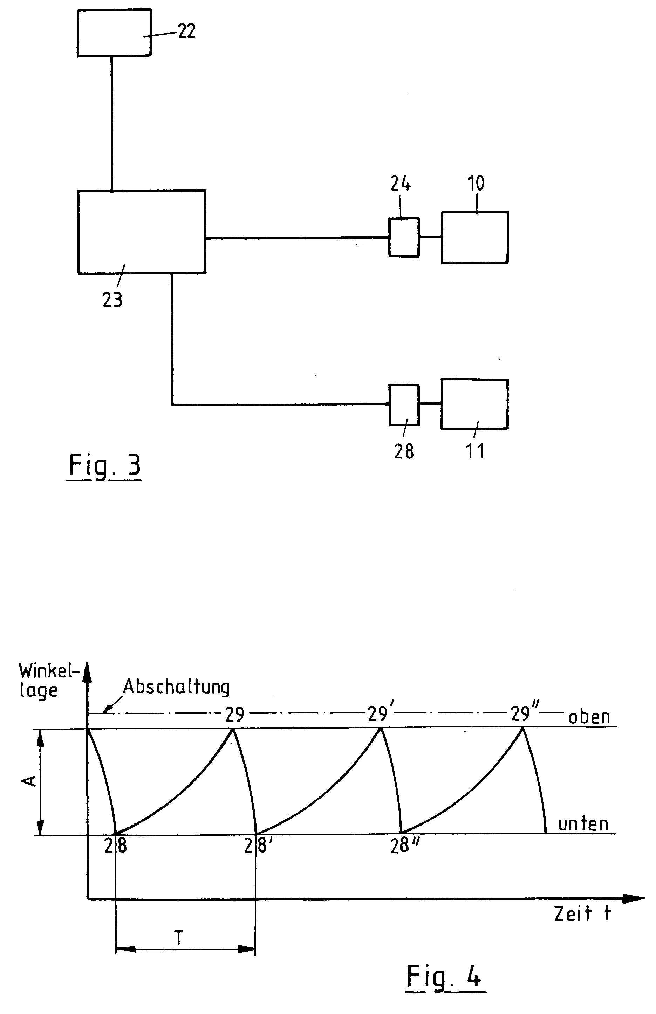

Das Verfahren läuft in folgender Weise ab. Die Thermoformmaschine liefert intermittierend einen Abschnitt des Restgitters 9 durch einen schnell ablaufenden Vorschubschritt der zugehörigen Transporteinrichtung, wodurch die Schwinge 16 nach unten fällt und ihre untere Endlage 28 (siehe Diagramm Figur 4) erreicht. Die Einzugswalzen 26, 27 schieben das Restgitter 9 durch den Schlitz 8 und das Restgitter 9 wird streifenweise abgeschnitten. Nach Ablauf eines Taktes der Thermoformmaschine hat die Schwinge 16 ihre oberste Lage 29 erreicht. Wieder folgt ein Transportschritt der Thermoformmaschine und die Schwinge 16 fällt in ihre untere Lage 28' und wird wieder in die obere Lage 29' gebracht.

Die Steuerung erkennt nun, ob sich die untere Lage 28, 28' bzw. obere Lage 29, 29' zwischen zwei Takten verändert hat. Entsprechend steuert sie die Drehzahl des Antriebes 10 in der Weise, daß die untere bzw. obere Lage konstant bleiben. Es erfolgt auf diese Weise eine Umsetzung der intermittierenden Bewegung des zugeführten Restgitters 9 in eine konstante kontinuierliche Transportgeschwindigkeit des Restgitters 9, mit der es von den Einzugswalzen 26, 27 in den Schlitz 8 geschoben wird. Ein konstanter Vorschubschritt zwischen zwei Schnitten bedeutet eine konstante Schnittbreite bei jedem Schnitt. Dabei wird die Drehzahl des Rotors 1 im Verhältnis zur Drehzahl der Einzugswalzen 26, 27 so gewählt, daß bei einer mittleren Taktzahl der Thermoformmaschine und einem mittleren Vorschub beispielsweise eine Schnittbreite von 6 mm entsteht. Diese Schnittbreite ändert sich allerdings, wenn sich die Taktzahl oder der Vorschub der Thermoformmaschine verändern, weil dann die Drehzahl der Einzugswalzen 26, 27 entsprechend verändert wird. Sie schwankt dann beispielsweise zwischen 4 und 8 mm, erreicht aber nicht eine kritische Breite zwischen 0 und 3 mm. Will man unabhängig von Taktzahl und Vorschub der Thermoformmaschine immer eine konstante Schnittbreite von beispielsweise 5 mm haben, muß man auch die Drehzahl des Rotors 2 veränderlich gestalten und in einem bestimmten Verhältnis zur Drehzahl der Einzugswalzen 26, 27 steuern. Dies wird in einfacher Weise dadurch möglich, daß die Steuerung 23 wie in Figur 3 angedeutet, auch einen Frequenzumrichter 28 angesteuert, der den Antrieb 11 beeinflußt.

Die Bildung einer Schlaufe 30 ist auch in der Weise möglich, daß anstelle der Schwinge 16 eine linearbewegliche Tänzerwalze angeordnet ist. Dabei könnte die Lage der Schlaufe 30 durch Abtastung der Lage der Tänzerwalze z. B. über einen linearen Meßwertgeber erfolgen. In beiden Fällen - Schwinge oder Tänzerwalze - sind andere Erfassungssysteme für die Schlaufe 30 denkbar, z. B. auf induktive bzw. kapazitive Weise oder über Ultraschall-Sensoren.

Eine Weiterbildung des Verfahrens besteht darin, die Startdrehzahl des Antriebes 10 zu finden, bei der der Regelvorgang der Lage der Schwinge 16 gestartet werden soll, z. B. nach einem Umrüsten der Thermoformmaschine oder nach einer Pause oder Störung der Thermoformmaschine. Dazu wird vorgeschlagen, beim Start der Schneidmühle - Schwinge 16 steht unten - die Zeit zwischen zwei Takten zu messen, in dem die Zeit T zwischen zwei Maxima oder Minima ermittelt wird. Ermittelt wird ferner der Ausschlag A, bedingt durch die Verdrehung der Schwinge 16 bei einer vorgegebenen und damit bekannten Drehzahl der Einzugswalzen 26, 27 bei diesem ersten Schritt. Die Steuerung 23 kann aus diesen drei Werten (Zeit T, Ausschlag A, Drehzahl der Einzugswalzen 25, 26) nach einem Takt eine ziemlich genaue Drehzahl für die Einzugswalzen 26, 27 errechnen und diesen Wert vorgeben. Von dieser so ermittelten Drehzahl aus erfolgt die Veränderung dieser Drehzahl aufgrund einer eventuellen Veränderung der unteren oder oberen Schwingenlage 28, 29.

Das Abstellen der Thermoformmaschine bewirkt eine Anhebung der Schwinge 16 in obere Lage 29 und darüber hinaus. Indem der Sensor 22 jede Winkellage erfaßt, kann über ihn die Abschaltung der Schneidmühle erfolgen, wenn die Schwinge 16 eine max. zulässige Stellung erreicht hat, z. B. wenn das Restgitter 9 zwischen den Umlenkwalzen 12, 13 nahezu eine Strecklage erreicht hat.

## Patentansprüche

1. Verfahren zum Ermitteln der mittleren Einzugsgeschwindigkeit einer Schneidmühle zum Zerkleinern des Restgitters einer vorgeschalteten, intermittierend betriebenen Thermoformmaschine, bei dem das Restgitter von Messern eines Rotors, die mit festen Messern an einem Stator zusammenwirken, zuerst streifenweise abgeschnitten und dann weiter zerkleinert wird, und bei dem zwischen Thermoformmaschine und Schneidmühle eine Schlaufe gebildet wird, dadurch gekennzeichnet, daß die Größe der Schlaufe (30) über einen einzigen Sensor (22) erfaßt und eine Veränderung dieser Größe zwischen einem oder mehreren Takten zu einer Veränderung der kontinuierlichen Drehzahl der Einzugswalzen (26, 27) über eine Steuerung (23) herangezogen wird, so daß die Größe der Schlaufe (30) konstant bleibt.

2. Verfahren nach Anspruch 1 dadurch gekennzeichnet, daß der Sensor (22) die Lage einer die Schlaufe (30) bildende Schwinge (16) erfaßt.

3. Verfahren nach Anspruch 1 dadurch gekennzeichnet, daß der Sensor (22) die Lage einer linear verschiebbaren Tänzerwalze erfaßt.

4. Verfahren nach einem der Ansprüche 1 - 3 dadurch gekennzeichnet, daß die obere Lage (29, 29') der Schlaufe (30) erfaßt und konstant gehalten wird.

5. Verfahren nach einem der Ansprüche 1 - 3 dadurch gekennzeichnet, daß die untere Lage (28, 28') der Schlaufe (30) erfaßt und konstant gehalten wird.

6. Verfahren nach einem der Ansprüche 1 - 3 dadurch gekennzeichnet, daß die Steuerung (23) eine mittlere Lage der Schlaufe (30) errechnet und konstant hält.

7. Verfahren nach einem der Ansprüche 1 bis 6 dadurch gekennzeichnet, daß die Größenveränderung der Schlaufe (30) während eines Taktes ermittelt wird.

8. Verfahren nach einem der Ansprüche 1 bis 6 dadurch gekennzeichnet, daß die Größenveränderung der Schlaufe (30) nach mehreren Takten ermittelt wird.

9. Verfahren nach einem der Ansprüche 1 bis 8 dadurch gekennzeichnet, daß die Drehzahl des Rotors (2) konstant gehalten wird.

10. Verfahren nach einem der Ansprüche 1 bis 8 dadurch gekennzeichnet, daß die Drehzahl des Rotors (2) in der Weise verändert wird, daß er immer in einem definierten gleichen Verhältnis zur Drehzahl der Einzugswalzen (26, 27) steht.

11. Verfahren nach einem der Ansprüche 1 bis 10 dadurch gekennzeichnet, daß beim Einschalten der Schneidmühle nach einem Stopp der vorgeschalteten Thermoformmaschine die Einzugswalzen (26, 27) mit einer definierten Drehzahl gestartet werden und dann aus der Zeit (T) zwischen zwei Takten und der Größenveränderung (A) der Schlaufe (30) während dieser Zeit (T) die Drehzahl der Einzugswalzen (26, 27) errechnet und ab dem zweiten Takt vorgegeben wird.

12. Schneidmühle zur Durchführung des Verfahrens nach Anspruch 1, bestehend aus einem Stator mit festen Schneidmessern, einem Rotor mit Schneidmessern, Einzugswalzen für das Restgitter und einer Einrichtung zur Bildung einer Schlaufe, gekennzeichnet durch einen Sensor (22) zur Erfassung der Größe der Schlaufe (30) und einen von einer Steuerung (23) angesteuerten, in der Drehzahl stufenlos veränderbaren Antrieb (10) für die Einzugswalzen (26, 27).

13. Schneidmühle nach Anspruch 12 gekennzeichnet durch eine Schwinge (16) zur Bildung der Schlaufe (30).

14. Schneidmühle nach-Anspruch 12 gekennzeichnet durch eine Tänzerwalze zur Bildung der Schlaufe (30).

15. Schneidmühle nach einem der Ansprüche 12 - 14 gekennzeichnet durch einen von der Steuerung (23) angesteuerten, in der Drehzahl stufenlos veränderbaren Antrieb (11) für den Rotor (2).

## Claims

1. Method of ascertaining the mean intake speed of a cutting mill for comminuting waste lattice of an upstream, intermittently operated thermomoulding machine, in which the waste lattice is initially cut into strips by knives of a rotor co-operating with fixed knives of a stator and is then further comminuted and in which a loop is formed between thermomoulding machine and cutting mill, characterised in that the size of the loop (30) is detected by a single sensor (22) and a change in this size between one or several cycles is drawn up for a change in the continuous rotational speed of the intake rolls (26, 27) by way of a control (23), so that the size of the loop (30) remains constant.

2. Method according to claim 1, characterised in that the sensor (22) detects the position of a rocker (16) forming the loop (30).

3. Method according to claim 1, characterised in that the sensor (22) detects the position of a linearly displaceable compensating roller.

4. Method according to one of claims 1 to 3, characterised in that the upper position (29, 29') of the loop (30) is detected and kept constant.

5. Method according to one of claims 1 to 3, characterised in that the lower position (28, 28') of the loop (30) is detected and kept constant.

6. Method according to one of claims 1 to 3, characterised in that the control (23) computes and keeps constant a mean position of the loop (30).

7. Method according to one of claims 1 to 6, characterised in that the change in size of the loop (30) is detected during one cycle.

8. Method according to one of claims 1 to 6, characterised in that the change in size of the loop (30) is detected after several cycles.

9. Method according to one of claims 1 to 8, characterised in that the rotational speed of the rotor (2) is kept constant.

10. Method according to one of claims 1 to 8, characterised in that the rotational speed of the rotor (2) is varied in the manner that it always stands in a defined equal ratio to the rotational speed of the intake rolls (26, 27).

11. Method according to one of claims 1 to 10, characterised in that, on switching-on of the cutting mill after a stop of the upstream thermomoulding machine, the intake rollers (26, 27) are started at a defined rotational speed and then the rotational speed of the intake rollers (26, 27) is calculated from the time (T) between two cycles and the change (A) in size of the loop (30) during this time (T) and is preset from the second cycle.

12. Cutting mill for carrying out the method according to claim 1, consisting of a stator with fixed cutting knives, a rotor with cutting knives, intake rollers for the waste lattice and a device for forming a loop, characterised by a sensor (22) for detection of the size of the loop (30) and a drive (10), which is controlled by a control (23) and steplessly variable in rotational speed, for the intake rollers (26, 27).

13. Cutting mill according to claim 12, characterised by a rocker (16) for formation of the loop (30).

14. Cutting mill according to claim 12, characterised by a compensating roller for formation of the loop (30).

15. Cutting mill according to one of claims 12 to 14, characterised by a drive (11), which is controlled by the control (23) and is steplessly variable in rotational speed, for the rotor (2).

## Revendications

1. Procédé pour déterminer la vitesse d'entrée moyenne d'un broyeur granulateur pour broyer des grilles résiduelles d'une machine de thermoformage à fonctionnement intermittent, travaillant en amont, selon lequel la grille résiduelle est tout d'abord coupée en bandes par les couteaux d'un rotor coopérant avec les couteaux fixes d'un stator pour être ensuite broyée et selon lequel, on forme une boucle entre la machine de thermoformage et le broyeur granulateur,
caractérisé en ce qu'
- on détecte la taille de la boucle (30) avec un seul capteur (22) et
- on utilise une variation de cette grandeur entre un ou plusieurs cycles de travail pour modifier la vitesse de rotation continue des cylindres d'entrée (26, 27) par l'intermédiaire d'une commande (23) pour que la taille de la boucle (30) reste constante.

2. Procédé selon la revendication 1,
caractérisé en ce que
le capteur (22) détecte la position d'un bras oscillant (16) formant la boucle (30).

3. Procédé selon la revendication 1,
caractérisé en ce que
le capteur (22) détecte la position d'un cylindre valseur à coulissement linéaire.

4. Procédé selon l'une des revendications 1 à 3,
caractérisé en ce qu'
on saisit la position supérieure (29, 29') de la boucle (30) et on la maintient constante.

5. Procédé selon l'une des revendications 1 à 3,
caractérisé en ce qu'
on saisit la position inférieure (28, 28') de la boucle (30) et on la maintient constante.

6. Procédé selon l'une des revendications 1 à 3,
caractérisé en ce que
la commande (23) calcule une position moyenne pour la boucle (30) et maintient celle-ci constante.

7. Procédé selon l'une des revendications 1 à 6,
caractérisé en ce qu'
on détermine la variation de taille de la boucle (30) pendant un cycle.

8. Procédé selon l'une des revendications 1 à 6,
caractérisé en ce qu'
on détermine la variation de taille de la boucle (30) après plusieurs cycles.

9. Procédé selon l'une des revendications 1 à 8,
caractérisé en ce qu'
on maintient constante la vitesse de rotation du rotor (2).

10. Procédé selon l'une des revendications 1 à 8,
caractérisé en ce qu'
on modifie la vitesse de rotation du rotor (2) pour qu'il soit toujours dans un rapport égal, défini, par rapport à la vitesse de rotation des cylindres d'entrée (26, 27).

11. Procédé selon l'une des revendications 1 à 10,
caractérisé en ce que
lorsqu'on met en oeuvre le broyeur granulateur, après un arrêt de la machine de thermoformage en amont, on fait démarrer les cylindres d'entrée (26, 27) suivant une vitesse de rotation définie et ensuite, à partir de la durée (T) comprise entre deux cycles et la variation de taille (A) de la boucle (30) pendant la durée (T), on calcule la vitesse de rotation des cylindres d'entrée (26, 27) et on la prédétermine après le second cycle.

12. Broyeur granulateur pour la mise en oeuvre du procédé selon la revendication 1, composé d'un stator portant des couteaux fixes, d'un rotor muni de couteaux, de cylindres d'entrée pour la grille résiduelle et d'une installation pour former une boucle,
caractérisé par
un capteur (22) pour détecter la taille de la boucle (30) et d'un entraînement de vitesse de rotation (10) variable en continu, commandé par une commande (23) pour les cylindres d'entrée (26, 27).

13. Broyeur granulateur selon la revendication 12,
caractérisé en ce qu'
il comporte un bras oscillant (16) pour former la boucle (30).

14. Broyeur granulateur selon la revendication 12,
caractérisé par
un cylindre valseur pour former la boucle (30).

15. Broyeur granulateur selon l'une des revendications 12 à 14,
caractérisé par
un moteur (11) à vitesse de rotation variable en continu pour le rotor (2), ce moteur étant commandé par la commande (23).
